# EUROPEAN PATENT SPECIFICATION

(11) **EP 3 069 061 B1**
(45) Date of publication and mention of the grant of the patent: **02.01.2019**
(21) Application number: 14802961.4
(22) Date of filing: 12.11.2014
(51) Int. Cl.: F16K 49/00

(54) **BALL MEMBER FOR A VALVE ASSEMBLY, BALL VALVE ASSEMBLY HAVING A BALL MEMBER AND METHOD FOR CONTROLLING THE TEMPERATURE OF A BALL MEMBER**
KUGELELEMENT FÜR EINE VENTILANORDNUNG, KUGELVENTILANORDNUNG MIT EINEM KUGELELEMENT UND VERFAHREN ZUR STEUERUNG DER TEMPERATUR EINES KUGELELEMENTS
BILLE D'UN ENSEMBLE SOUPAPE, ENSEMBLE SOUPAPE À BILLE POURVU D'UNE BILLE ET PROCÉDÉ DE RÉGULATION DE LA TEMPÉRATURE D'UNE BILLE

(30) Priority: 12.11.2013 SE 1351330
(43) Date of publication of application: 21.09.2016
(73) Proprietor: AB Somas Ventiler, 661 23 Säffle (SE)
(72) Inventor: MORICHETTO, Peter, S-662 31 Åmål (SE)
(74) Representative: Hynell Patenttjänst AB
(86) International application number: PCT/SE2014/051346
(87) International publication number: WO 2015/072915

(56) References cited:
- GB-A- 1 022 012
- US-A- 4 583 570
- US-A- 6 050 289

## Description

### TECHNICAL FIELD

The present invention relates to a ball valve assembly including a ball member and a valve housing, wherein the ball member is rotatably arranged relative the valve housing about an axis of rotation and is provided with a through hole forming a passageway for fluids, the ball member having an outer wall facing the valve housing and an inner wall facing the through hole arranged such that a hollow space is formed between the walls, a first stub shaft extending between the inner and outer walls along said axis of rotation, and a second stub shaft extending between the inner and outer walls along said axis of rotation on an opposite side of the through hole. The invention also relates to a ball valve assembly comprising a ball member and a method for controlling the temperature of a ball member.

### BACKGROUND ART

A ball valve is typically installed in a pipe and can be operated by a valve stem coupled to a ball member having a through hole. By rotating the ball inside the valve, the opening or closing of the valve to control the flow through the pipe can be performed: when the passageway through the ball is aligned with the pipe, liquid can flow easily through it, and when the passageway is arranged perpendicular to the valve ends, the flow of liquid is impeded by closing the valve.
In this manner, many different industries make use of ball valves in order to control fluid. Some of these industries are oil and gas manufacturers, chemical and petrochemical, paper, textile manufacturers, power plants, steel manufacturers, pharmaceuticals processing as well as water and sewage plants.
Two examples of ball valves are disclosed in WO 2011/015705 and WO 03/046423 respectively.

In GB 1,022,012 a valve is disclosed in which the valve body includes a tubular member having diametrically opposed ports which communicate with fluid supply and delivery pipes, a pair of clamping plates, one at each end of said tubular member and means for urging the clamping plates into engagement with the ends of the tubular member and in which the valve member includes a sphere having diametrically opposed inlet and outlet ports connected by a through passage which can be brought into or out of register with the ports in the tubular member and a valve stem extending radially of the sphere and passing through an aperture in one of the clamping plates, sealing means for engagement with the valve member being associated with at least one of the ports in the tubular member.

In JPS 55-137773 a ball member comprised in a ball valve assembly is disclosed. Said ball member is rotatably arranged relative a valve housing about an axis of rotation and is provided with a through hole forming a passageway for fluids, the ball member having an outer wall facing the valve housing and an inner wall facing the through hole arranged such that a hollow space (40) is formed between the walls.

Document US 6 050 289 discloses a valve for feeding abrasive particulate material to, and removal of particulate material from a pressurized vessel, adapted to operate at temperatures above 500 °C., comprising a valve structure wherein a single shutoff member of generally spherical shape performs both functions of shutoff the particulate material and the gas-tight sealing by means of a resilient inflatable circular seal element which engages the convex side of said shutoff member. Said seal element is inflated and cooled by a pressure regulated and continuously flowing stream of liquid water. The seal element is protected from being damaged at high temperatures by contacting it with the cooled shutoff member when the valve is closed and with a cooled circular extension of the shutoff member when the valve is open.

### OBJECTS OF THE INVENTION

It is an object of the present invention to provide an improved ball valve assembly. It is also an object of the invention to provide a ball member for a ball valve with reduced weight but still having sufficient material strength, and which is less expensive compared to ball members of prior art. It is further an object of the present invention to provide a method for controlling the temperature of a ball member in a ball valve assembly according to the invention. Other objects will become clear from the hereinafter following description.

### SUMMARY OF THE INVENTION

The objects of the invention are achieved by means of a ball member, a ball valve assembly and a method for controlling the temperature of a ball member according to the independent claims.

Further aspects of the ball member, the ball valve assembly and the method for controlling temperature and manufacturing the ball member are apparent from the accompanying patent claims and from the following description of preferred embodiments of said devices. It shall be understood that terms like upper, upwards and lower, downwards, upper surface, and bottom surface, respectively etc. refer to a ball member and a corresponding valve assembly installed in a horizontal pipe, with the stem assembly directed vertically upwards and the axis of rotation of the ball member arranged in a vertical alignment. The terms have been chosen merely to facilitate the understanding of the description and do in no way exclude e.g. vertical pipes, etc. It shall further be understood that terms like inner, inwards etc. refer to a direction towards the center of the ball and terms like outer, outwards etc. refer to a direction towards the exterior of the ball member. In addition, the wording truncated sphere refers to a sphere which has been truncated by cutting said sphere with a pair of parallel planes.

According to one aspect, the invention provides a ball member for a ball valve including a valve housing, wherein the ball member is rotatably arranged relative the valve housing about an axis of rotation and is provided with a through hole forming a passageway for fluids, the ball member having an outer wall facing the valve housing and an inner wall facing the through hole arranged such that a space is formed between the walls, the ball member further being provided with a first stub shaft extending between the inner and outer walls along said axis of rotation, and a second stub shaft extending between the inner and outer walls along said axis of rotation on an opposite side of the through hole.

Thereby, the ball member can be made with increased material efficiency, i.e. lighter and more cost efficient, while at the same time maintaining a sufficient material strength for operating in a desired manner.

A ball member having a hollow space provides the advantages of having a low weight and consuming less material compared to solid ball members, which leads to reduced material costs.

In a preferred embodiment, the ball member is made of steel, a nickel base alloy or a titanium alloy and is manufactured by means of casting as essentially one integrated unit. Thus, the hollow ball member will have sufficient material strength and resist high pressures and be durable enough for tough circumstances and high pressures.

According to one aspect of the invention, the ball member is arranged with temperature controlling means, comprising at least an inlet and an outlet (e.g. nozzles arranged in a spindle in a manner known per se) for injecting and removing a medium with a predetermined temperature into the hollow space between the inner and outer wall. The medium will immediately upon being injected spread and completely fill the hollow space, thus affecting a temperature of the inner and outer walls, before being removed through the outlet. Thus, the outside of the ball member as well as the through hole, i.e. the passageway through the ball member, will be affected by the temperature of the medium. Injecting medium with a predetermined temperature into the hollow space leads to a very efficient and easy way of controlling the temperature of the ball member and thereby also of the valve per se. Thereby, the valve can maintain the temperature of a substance flowing through the passageway and can also prevent said substance from cooling and thereby setting. This is especially beneficial when the valve is in a closed state so that a quantity of the substance is held inside the through hole for a longer period of time, and for preventing the valve seat from being affected by cooling substance. In some embodiments, for instance when a medium of a high temperature is passing through the passageway, it may also be beneficial to inject a temperature controlling medium with a low temperature, to prevent the ball member or valve ball member from overheating.

Certain media such as black liquor, bitumen etc. may be associated with problem of clogging. Providing heat may prove advantageous for eliminating/reducing the risk that medium passing through the valve gets clogged e.g. at the valve seat, and by applying heat to the surfaces of the ball member and to adjacent components where the medium could cause problems when cooling, such as hindering the rotation of the ball member or causing leakage in the closed position, the operation of the valve assembly can be improved.

According to another embodiment of the invention a portion of said first stub shaft protrudes on the outside of the outer wall and is designed to rotatably connect the ball member to the valve housing, and designed for receiving a stem assembly for rotating the spherical body, and a portion of the second stub shaft protrudes on the outside of the outer wall and is designed to rotatably connect the ball member to the valve housing. An upper trunnion comprising the first stub shaft and a lower trunnion comprising the second stub shaft, respectively, comprise essentially flat surfaces and are arranged to be connected to upper and lower bearing pedestals. This means that the ball member has the shape of a truncated sphere, with essentially flat upper and lower surfaces. Hereby, the trunnions may be mounted closer to the center of the ball member which leads to improved bearing performance for maneuvering (e.g. rotating) the ball inside the valve. It is very advantageous to have the trunnions closer to the center of the ball member, since a deformation of the trunnions during maneuvering can be kept to a minimum and the operation of the bearings is improved.

Preferably, the through hole through the ball member is cylindrical. Turbulence of the fluid which passes through the valve is thus minimised.

### BRIEF DESCRIPTION OF THE FIGURES

In the following, the invention will be described in more detail with reference to preferred embodiments and the appended drawings.
- Fig. 1a: is a side view of a preferred embodiment of a trunnion valve in accordance with the present invention,
- Fig. 1b: is a cross-sectional side view of the valve according to Fig. 1a in a closed state,
- Fig. 1c: is a cross-sectional side view of the valve according to Fig. 1a in an open state,
- Fig. 2: is an exploded perspective view of the valve of Figs. 1a and 1b,
- Fig. 3: is a cross sectional view of a ball member according to the invention,
- Fig. 4a: is a cross sectional view schematically illustrating the principle for flow injection through the ball member,
- Fig. 4b: is a perspective view of the ball member of Fig. 4a illustrating the flow of a temperature controlling medium through the hollow space,
- Fig. 4c: is a close-up view according to IV in Fig. 1c,
- Figs. 5a - c: show detailed views of the valve according to the invention,

### DETAILED DESCRIPTION

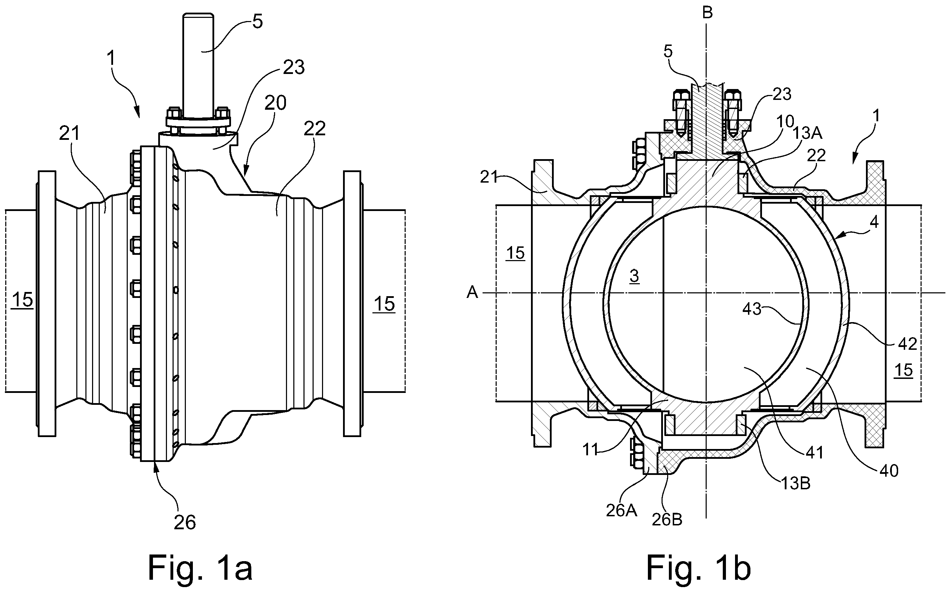

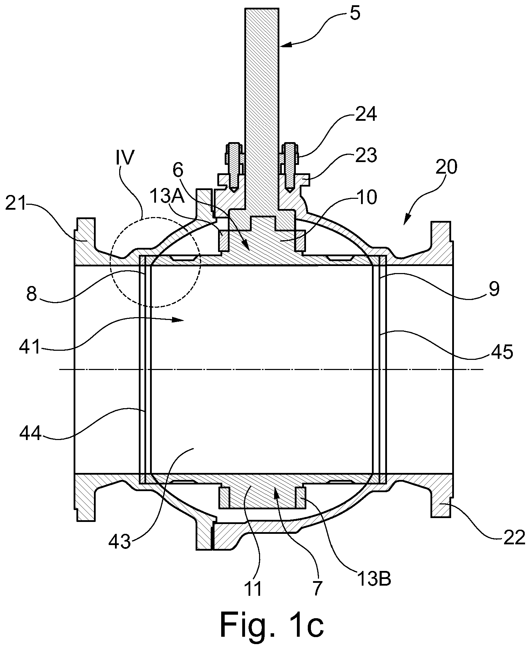

Fig. 1a, 1b and 1c show a preferred embodiment of a ball valve assembly 1 according to the present invention. The shown ball valve assembly 1 is seen in a side view and includes a valve housing 20 installed in a pipe 15 for a fluid medium flowing therethrough along a central axis A of the pipe 15.

The ball valve assembly 1 thus comprises a housing 20 with a first housing part 21 and a second housing part 22 joined together at a connecting flange 26A, 26B and each connected to the pipe 15 in such a way that the first and second housing parts 21, 22 connect to pipe 15 and are in this embodiment joined by flanges, although threads or welding would also be suitable for mounting the ball valve assembly in the pipe. The valve can also be of wafer type design, i.e. mounted in the pipe by clamping between pipe flanges. Inside the housing 20, a valve ball member 4 is mounted in a chamber 3 and to this valve ball member 4 is attached a stem assembly 5, preferably in the form of a valve stem 5 for rotation of the valve ball member 4 around an axis of rotation B extending along a center of said valve stem 5. Further, the valve ball member 4 comprises a hollow space 40 extending between an inner wall 43 and an outer wall 42, said inner wall 43 defining a through hole 41 in the form of a passageway 41 for a medium with substantially the same dimension as the pipe 15. The through hole 41 comprises a first aperture 44 at one end of the through hole and a second aperture 45 at the other end of the through hole 41 through the valve ball member 4. Said through hole 41 is essentially cylindrical and thanks to the similarity in size with the passageway through the pipe 15, turbulence in the pipe and through hole 41 can be minimized.

By rotating the valve ball member 4 around the axis of rotation B, the valve ball member 4 of the valve assembly 1 can be moved from an open state, in which the through hole 41 is aligned with the central axis A of the pipe 15 so that a medium can flow through the valve assembly 1 from the pipe 15 adjacent to the first housing part 21 to the pipe 15 adjacent to the second housing part 22, or vice versa, to a closed state, in which the through hole 41 is transversal to the central axis A of the pipe 15, preventing a flow through the valve assembly 1. Fig. 1b shows the valve assembly 1 in a closed state, whereas Fig. 1c shows the valve assembly 1 in an open state.

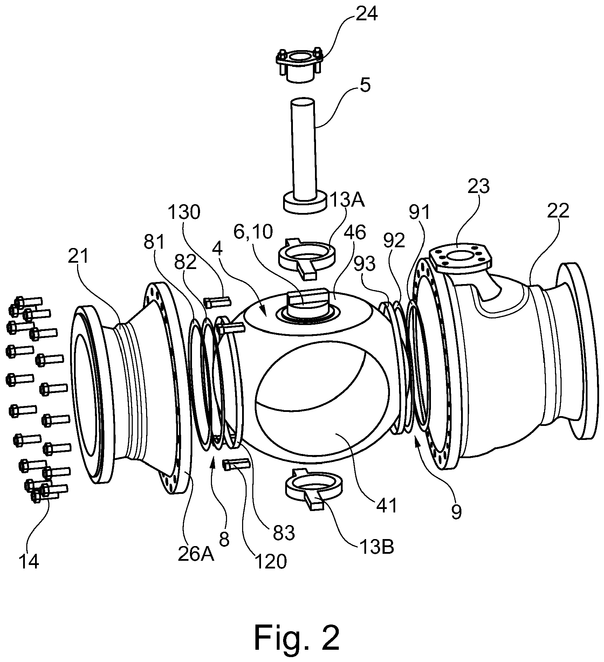

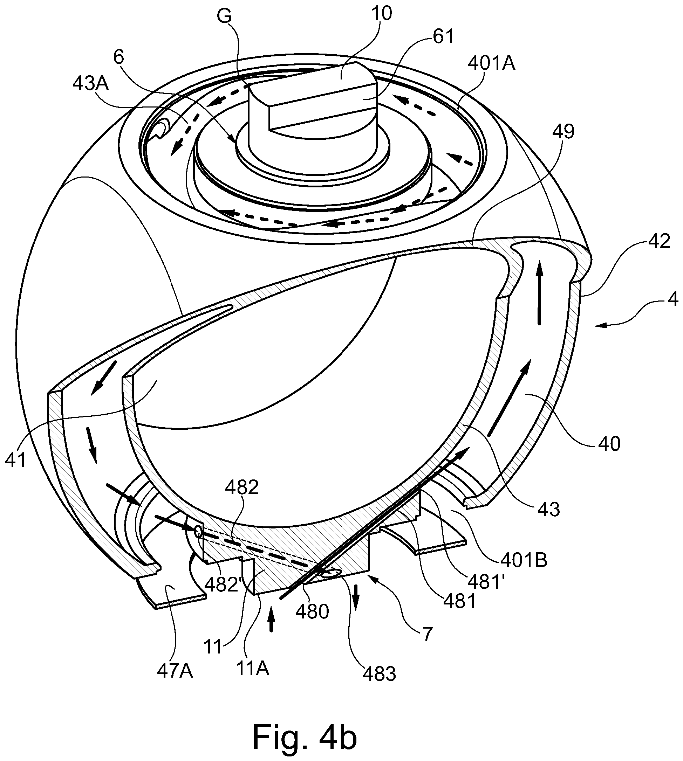

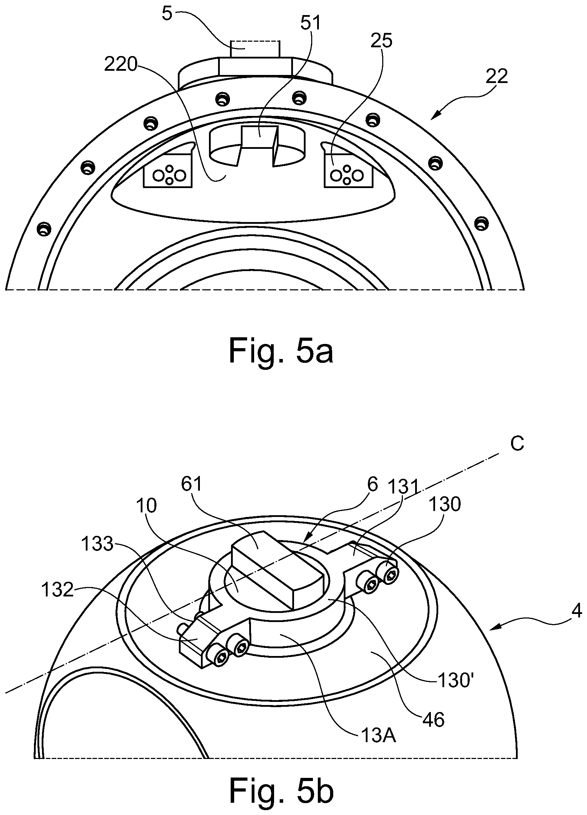

In Fig. 2, the ball valve member 4 can be seen, with a first aperture 44 defining one end of the through hole 41. When mounting the ball valve assembly 1, a valve stem 5 is in a first step mounted through an opening at a valve stem flange 23 in the second housing part 22, and in a second step, an upper bearing pedestal 13 A is mounted on an upper trunnion 6 and a lower bearing pedestal 13B is mounted on a lower trunnion 7, wherein said trunnions 6, 7 are in the forms of stub shafts 10, 11 integrated with the inner wall 43, see fig. 1c, of the valve ball member 4. In a third step, a second valve seat 93 together with a spring 92 and second distance ring 91 is placed into the second housing part 22, and the valve ball member 4 together with the upper bearing pedestal 13A and the lower bearing pedestal 13B are inserted into the second housing part 22 to be connected by means of screws 120, 130 to the housing part 22 and by a formgrip arrangement 51, to the valve stem 5, see fig. 4b, 5a. As shown in figures 5a and b the bearing pedestals 13A, 13B are in the form of a central ring 130' with two attachment arms 131, 132 arranged with screw holes. The arms 131, 132 may be excentrically fixed to the ring 130' whereby an attachment surface 133 of the arms 131, 132 will be positioned adjacent center line C of the ring 130'. Various positions of the arms 131, 132 are feasible. The attachment surfaces 133 of the arms 131, 132 are attached to support surfaces 25 within the second housing 22. Between the support surfaces 25 there is arranged space 220 enabling the ring 130' and the stub shafts 10, 11 to fit in within the second housing 22. In a fourth step, a first valve seat 83 together with a spring 82 and first distance ring 81 are mounted on the valve ball member 4 and covered by the first housing part 21 in such a way that the first and second housing parts 21, 22 can be connected by a number of screws 14 at the connecting flange 26. In a fifth step, sealing rings (not shown) and a gland 24 are mounted to achieve a leak tight seal between the housing and the stem.

Thanks to valve seat assemblies 8, 9 that comprise the first valve seat 83, spring 82 and first distance ring 81, and second valve seat 93, spring 92 and second distance ring 91, respectively, the valve ball member 4 can be rotated with low friction inside the housing 21, 22, while at the same time providing a leaktight seal between the outer wall 42 of the valve ball member 4 and the first and second housing part 21, 22 respectively.

From the ball member 4, a first stub shaft 10 thus extends upwards along the axis of rotation B to cooperate with the bearing pedestal 13A and to receive the valve stem 5 and a second stub shaft 11 extends downwards along the axis of rotation B to cooperate with the bearing pedestal 13B and allow the ball member 4 to rotate by means of the upper and lower trunnions 6, 7 in cooperation with the upper and lower bearing pedestal 13A, 13B. The stub shafts 10, 11 are integrated means of the inner wall 43. The inner wall 43 and the outer wall 42 are thus only integrated in the region of the orifices of the through hole 41 and in that/those cases when the outer wall 42 and the inner wall 43 have a connection to each other in the area of the first and/or the second stub shafts 10, 11, preferably in the form of an integral wall 71.

The ball member 4 has upper and lower annular openings 401A, 401B to be sealed by means of upper and lower lids 46, 47. As mentioned the stub shafts 10, 11 are preferably integrated parts extending outwardly from the inner wall 43.

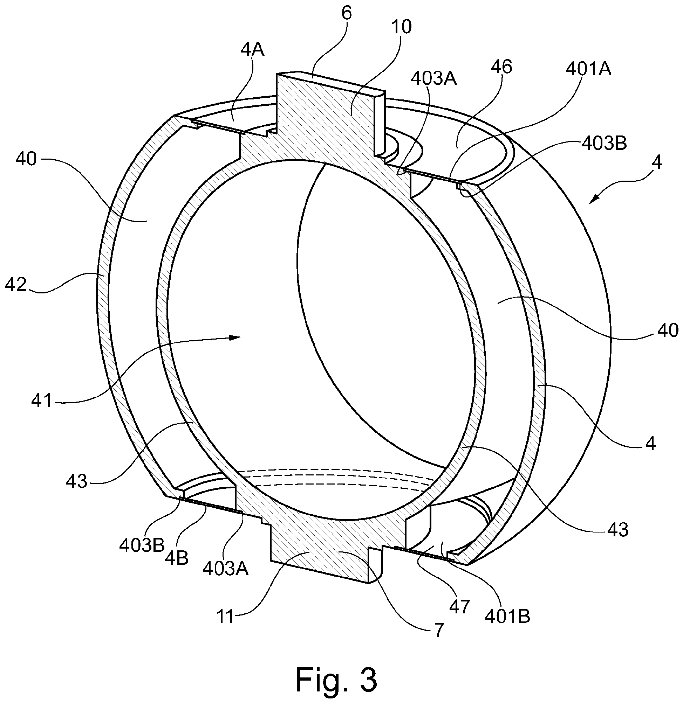

Fig. 3 shows a first embodiment of the valve ball member 4 with the outer wall 42 and the inner wall 43 that define the through hole 41. Between the outer wall 42 and the inner wall 43, a hollow space 40 is formed, extending from an upper lid 46 at the upper trunnion 6 to a lower lid 47 at the lower trunnion 7. To better enable secure and sealable closing of the annular openings 401A, 401B between the stub shafts 10, 11 and the outer wall 42 the edge of the respective lids 46, 47 are fitted against an edge 403A extending around the stub shaft 10,11 and another edge 403B extending around an upper and lower rim of the outer wall 42 respectively. By allowing a medium of a given temperature to be inserted into this hollow space 40 and circulated, the temperature of the valve ball member 4 can be altered and/or controlled, as will be described in more detail further below. By thus heating or cooling the outer wall 42, the first and second valve seats 81, 91 can also be affected. The flat upper and lower surfaces 4A, 4B of the ball member are preferably arranged in the proximity to the outside of the inner wall.

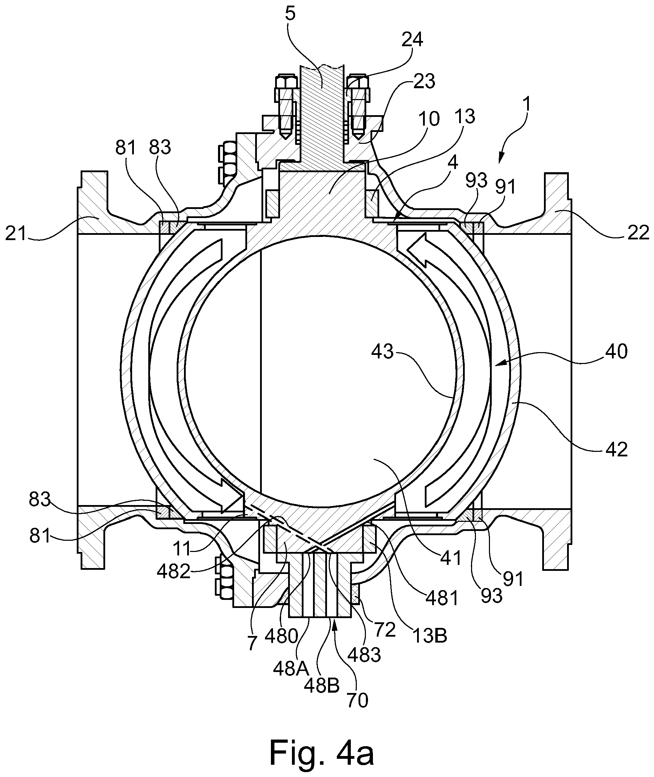

Fig. 4a shows the valve ball member 4 in the housing 20 when the valve assembly 1 is in a closed state, i.e. when the valve ball member 4 has been turned by means of the valve stem 5 so that the outer wall 42 abuts the valve seat 83, 93 while the first aperture 44 and the second aperture 45 at the other end of the through hole 41 through the valve ball member 4 are facing an interior of the housing 20. In this position, the flow through the valve ball member 4 is prevented. The valve ball member 4 is arranged to rotate easily by turning on the upper trunnion 6 and lower trunnion 7 when operated by rotating the valve stem 5. In Fig. 4a, the injection and ejection of a temperature mediating medium of a predetermined temperature is shown more clearly, with injection means 48A in the form of an inlet 480 at the lower trunnion 7 for injecting the medium into the hollow space 40, allowing it to circulate therein and to evacuate the hollow space 40 through an outlet 483 at the ejection means 48B as shown by arrows. As shown in figure 4b the inlet opening 480 is positioned in the outer surface 11A of the stub shaft 11 and a bore 481 forms a channel, with mouth 481' opening up within the hollow space 40. A similar channel 482 is arranged to also provide an outlet 483 in the outer surface 11A of the stub shaft 11. The temperature controlling means 48A, 48B thus comprise an inlet 480 and an outlet 483 for a temperature controlling medium and is preferably placed at the lower trunnion 7, but can also be located at the upper trunnion 6 upper stub shaft or at both the upper and lower trunnions 6, 7. Injection and ejection means, preferably in the form of tubes or hoses transporting the medium, may be connected to the temperature controlling means 48A, 48B and lead to and from a supply of this medium.

Fig. 4b is a perspective view of the ball member 4 with a semi circular cut away along the line I-I shown in fig. 1c. In fig. 4b the flow inside the hollow space 40 is shown, disclosing how the temperature mediating medium is allowed to flow around the first stub shaft 10 as indicated by dotted arrows. The temperature mediating medium enters the hollow space 40 from an outlet 481' of an inlet channel 481, flows up within the hollow space 40 of the inlet side, up to the top and across into the second half where it flows down to an inlet 482' of an outlet channel 482. Thus, the hollow space 40 extends around the inner wall 43. The hollow space 40 further extends around a circumference of the first stub shaft 10.

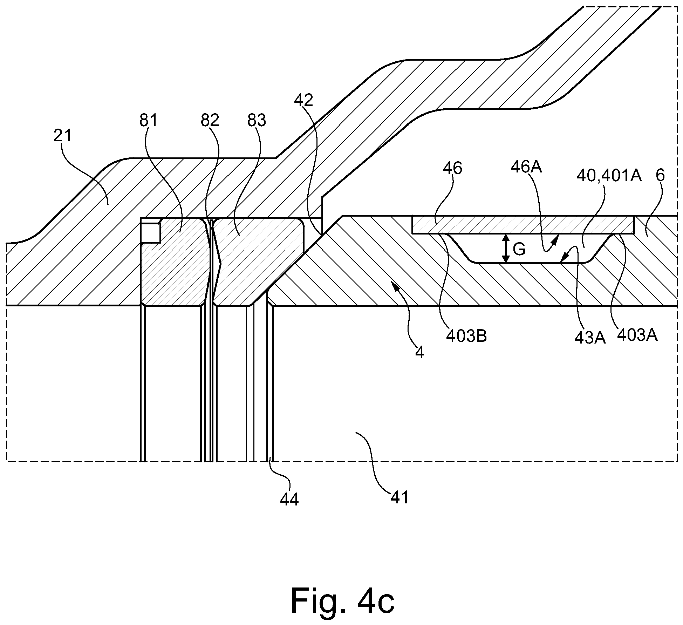

The flat upper and lower surfaces 4A, 4B (see figure 3) of the ball member are preferably arranged close to the outside of the inner wall 43, however, preferably not closer than a gap G is provided between upper and lower lids 46, 47 and the outside of the inner wall 43. The gap G will be further described in connection with figure 4c. The flat upper and lower surfaces 4A, 4B of the truncated sphere is thus close to the outside of the inner wall 43 without abutting it.

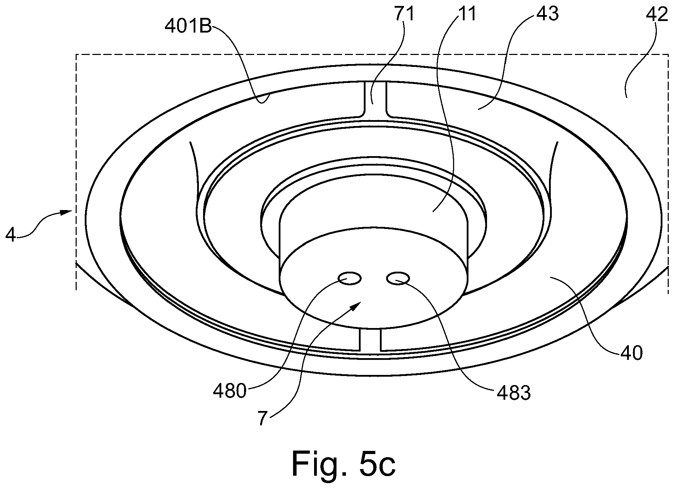

The temperature mediating medium is entering the hollow space 40 in one symmetrical half of the ball member 4, flows to and around the first stub shaft 10 while passing through the narrow gap G and continues to the hollow space 40 located in the other symmetrical half of the ball member 4. In the embodiment described in connection to fig. 5c the narrow gap G at the lower end of the ball member 4 is shut off by the internal walls 71 so the temperature mediating medium enters through one symmetrical half of the ball member 4 and leaves through the other half. It is also possible with the reverse arrangement, i.e. that the temperature mediating medium enters the ball member 4 through temperature controlling means 48 in the upper trunnion 6 and flows around the lower second stub shaft 11 by a narrow gap and that the first stub shaft 10 comprises the internal walls 71 that prevent the temperature mediating medium from taking the shortcut and flow directly from the inlet to the outlet of the injection means 48. The skilled person also understands that it is possible to let the temperature mediating medium enter into both symmetrical halves of the ball member in the upper part of the ball member 4 and exit in the opposite lower part of the ball member 4, or vice versa. In this case both the upper and lower flat surfaces of the truncated sphere may abut the outside of the inner wall 43.

In Fig. 4c, a close-up of the valve ball member 4 in open position according to detail IV in Fig. 1c is shown, with the first valve seat 83 abutting the outer wall 42 of the valve ball member 4 and the sealing ring 81 placed between the valve seat 83 and the first housing part 21 to prevent leakage of medium from the pipe 15 to the outside of the valve seat 83. Between the first valve seat 83 and sealing ring 81, a spring 82 is provided to act as a spring and maintain a leaktight seal. Although not described here, it shall be understood that the arrangement of the second valve seat 93, the second spring 92 and the second sealing ring 91 between the outer wall 42 of the valve ball member 4 and the second housing part 22 is configured in the same way. It shall further be understood that in the preferred embodiment the arrangement of the lower lid 47 at the lower essentially flat surfaces 4B is the same as the arrangement for the upper lid 46 at the upper essentially flat surfaces 4A described in this figure.

The annular opening 401A between the trunnion 6 and the outer wall 42 is covered by the lid 46. The edges of the lids 46, 47 are fitted against the edges 403A, 403B extending around the trunnion 6 and fixed thereto, preferably by welding. The lid 46 closes the upper annular opening 401A of the hollow space 40 providing a small gap G between the outer surface 43A of the inner wall 43 and the inner surface 46A of the lid 46. The gap G provides a passageway for the temperature mediating medium between the two parts of the hollow space 40 located at opposite sides of the valve ball member 4. The narrow gap G may have different size depending on the media to flow through the hollow space 40.

At least as far as the preferred embodiment is concerned where the temperature mediating medium is allowed to circulate the entire hollow space 40 the following is believed to be true. Within the concept of the invention, it is an object to cut off as much as possible of the outer wall at the upper and lower area of the ball member 4. The lids 46, 47 shall preferably be placed as close as possible to the outside of the inner wall 43 without abutting it. However, in order to allow medium to pass the gap G without excessive pressure loss the depth of the gap shall not be too shallow. Instead, the depth of the gap shall be adapted to the width of the gap such that a sufficient flow of the medium may be achieved. The gap G may have a depth in the range of 2 -20 mm. For example, a valve ball member having a dimension of DN500, i.e. inner diameter of the through hole is 500 mm, may have a gap G with the dimensions 5 x 50 mm (depth x width) if the temperature mediating medium to be used is gas, e.g. steam. If instead a liquid medium is used the dimensions are increased.

In the event that medium should remain at the valve seat, for instance when the ball valve is in a closed state (see fig 4a), a cooling of the medium could result in a clogging of the valve seat 83. The possibility of heating the outer wall 42 of the valve ball member 4, however, serves to prevent such a clogging and keep the valve seat 83 and the medium closest to it at a suitable temperature. Thanks to this application of the temperature controlling medium, the ball member 4 and adjacent components are heated to prevent a cooling and possible clogging of the medium flowing in the pipe 15. The medium in the pipe 15 is also indirectly heated by this process, so that the movements of the ball member 4 are further facilitated and the flow through the valve assembly 1 improved.

Fig. 5a and 5b shows the second housing part 22 comprising the opening in the a valve stem flange 23 that the valve stem 5 extends through. The upper trunnion 6 of the first stub shaft 10 comprises a protrusion 61 arranged to fit into a slit 51 of a lower end of the valve stem 5 and by securing the upper bearing pedestal 13A to a trunnion seat 25 of the second housing part 22, preferably by means of screws 130, the valve ball member 4 can be made to rotate along with the valve stem 5 in a simple and efficient manner. The upper lid 46 comprises an essentially flat surface 4A to facilitate the mounting of the valve assembly 1 and the turning of the valve ball member 4. The lower bearing pedestal 13B and the lower trunnion 7 are arranged in a similar manner at a lower bearing seat in the second housing 22.

Fig. 5c shows an alternative embodiment of the bottom of the ball member 4 with the second stub shaft 11 and the lower trunnion 7 before attachment of the lower lid 47. An internal wall 71 is arranged at the second stub shaft 11 which can be seen in this figure. The internal wall 71 prevents the temperature mediating medium from flowing from the inlet channel 481 directly to the outlet channel 482 without passing through the entirety of the hollow space 40, i.e. prevents it from flowing around the second stub shaft 11. The internal wall 71 extends on both sides of the second stub shaft 11 at the lower trunnion 7 and runs in parallel to the passageway 41. The flow of the temperature mediating medium is thus limited by the internal wall 71 extending parallel to the passageway 41 on both sides of the second stub shaft 11 at the lower trunnion 7 and thereby dividing the ball member 4 into symmetrical halves. The internal wall is preferably but not necessarily arranged at the narrowest portion between the inner surface of the lid 47 and the outer surface of the inner wall 43. After the lower lid 47 has been mounted the internal wall 71 the inner wall 71 abuts the inner surface of said lower lid 47 so that a tight seal is achieved.

The operation of the valve assembly 1 according to the invention will now be described in more detail.

After mounting the valve assembly 1 in conjunction with a pipe 15, as has been described above, the flow in the pipe 15 can be controlled by alternating between an open state, enabling a flow through the valve ball member 4, and a closed state where no flow can take place. The valve assembly 1 can also be used as a control valve to regulate the flow, allowing the ball member 4 to be placed at an angle from an open or closed position to regulate the flow in the pipe 15.

The operation from an open to a closed state, and vice versa, is performed by turning the valve stem 5 around the axis of rotation B, that is perpendicular to the longitudinal axis A. Thanks to the cooperation of the slit 51 and the protrusion 61, the rotation of the valve stem 5 also creates a rotation of the valve ball member 4, to allow said valve ball member 4 to rotate with respect to the valve housing 20 to either block the pipe 15 by presenting the outer wall 42 or allow a flow to pass through the through hole 41 by presenting the first and second apertures 44, 45.

In some embodiments, it is advantageous to manage or maintain the temperature of a medium in contact with the valve internals. Thanks to the invention, this is achieved by inserting a medium with a given temperature through the injection means 48 into the hollow space 40. Said injection means 48 can be in the form of an inlet to which a supply conduit can be attached so that the medium for temperature management can be supplied and extracted through an outlet from the hollow space 40. Said outlet can be mounted adjacent to the inlet so that the medium can flow into the hollow space 40 and propagate from the area of the second stub shaft 11 at the lower trunnion 7 towards the first stub shaft 10 at the upper trunnion 6 and again towards the lower trunnion 7 in a circular movement around the circumference of the inner wall 43 and exit the hollow space 40 at the lower trunnion 7, as described in Fig. 4a and further above. This embodiment allows for the connection at the lower trunnion 7 to both supply and outlet conduits for the medium, giving advantages as to the simplicity of the construction and mounting of temperature control means at the pipe 15 and the valve assembly 1.

In another embodiment, the inlet can be arranged to allow the medium to enter the hollow space 40 at the lower trunnion 7 and propagate along the inner wall 43 towards an outlet at the upper trunnion 6, or vice versa. In this embodiment, the medium performs a semicircular movement in a clockwise direction on one side of the through hole 41 and a semicircular movement in an anti-clockwise direction on the other side of the through hole 41. This embodiment can allow for a more efficient control of the temperature inside the through hole 41, since a hot or cold medium entering the inlet at the lower trunnion 7 can act in a symmetrical way on both sides of the inner wall 43 and avoid a situation where the medium acting on one side is of a higher or lower temperature than the medium acting on the other side. It is of course possible to inject the temperature controlling medium through an inlet at the upper trunnion 6 and evacuate through an outlet at the lower trunnion 7.

The medium for controlling temperature can preferably be hot steam or another gas of high temperature for increasing the temperature of the inner and outer wall 42, 43 and the upper and lower lid 46, 47, thereby providing indirect heating of the process media in contact with these surfaces which facilitates manoeuvring of the valve ball member 4. For lowering the temperature, a fluid such as water, liquid nitrogen or liquid oxygen could be suitable.

It is advantageous that the hollow space 40 extends uninterrupted from the entire inner wall 43 to the entire outer wall 42 with limitations only at the first and second stub shafts 10, 11 at the upper and lower trunnions 6, 7, respectively. That the medium for controlling temperature can thus flow freely inside the hollow space 40 from the join 49 (see fig. 4b) between the inner and outer walls 43, 42 at the first aperture 44 to the join 49 at the second aperture 45 and from the area of the lower trunnion 7 towards and around the upper trunnion 6 and further on towards the lower trunnion 7 again allows for an excellent control of the temperature of the surfaces in contact with the process media as well as simplicity of construction of the valve ball member 4 and minimizing of the material required for the manufacture of the valve ball member 4. Thanks to the manufacturing method described below, the valve ball member 4 has sufficient material strength to avoid the risk of damages, cracking or breaking during operation.

The manufacture of a valve ball member 4 for the valve assembly 1 of the invention is preferably performed through moulding, with sand filling the hollow space 40 to prevent the material used for the valve ball member 4 from entering the hollow space 40. After the material has set, the sand is removed and upper and lower lids 46, 47 mounted through any suitable method, for instance through welding, to the upper and lower ends of the ball member 4. The material used for the ball member 4 is preferably steel, titanium alloy, or nickel base alloy.

Thanks to the ball member 4 having the form of a truncated sphere due to its flat upper and lower surfaces 4A, 4B, rather than having the form of a complete sphere, material savings of the ball member are made which lead to a ball member lighter in weight and cheaper to produce due to lower material costs than prior art ball members. Further, thanks to the use of a ball member with the form of a truncated sphere the stub shafts are located closer to the central axis of the pipe and as a result the distance from the stub shafts to the forces of the flowing medium inside the pipe is reduced, leading to less deformation of the stub shafts and the ball member. In addition, material savings of the housing may also be made since the form of the housing may be adapted to the form of the truncated sphere.

Furthermore, since the stub shafts are integral means of the inner wall, said stub shafts are located even closer to the central axis of the pipe than is the case for prior art valve assemblies which have the stub shafts located on the outer wall of the ball member.

The invention is not to be seen as limited by the preferred embodiments described above, but can be varied within the scope of the appended claims. For instance, it is to be noted that the specific construction of the valve assembly 1 and the means for securing parts of the assembly to each other can be varied. As an alternative to screws as fastening agents, bolts or the like can be used, or other methods such as welding can also be employed. Another alternative could be that the distance ring(s) may be an integrated part of the housing. The gap G between the lids and the inner wall in the upper and lower flat surface of the ball member may be arranged in other ways than described herein, e.g. channels or recesses may be arranged in the inner surface of the lids.

In the table below some benefits associated with various technical features are listed. An embodiment of the ball member or ball valve assembly may comprise one or several of the listed features and/or benefits. Not all of the listed features and the benefits they provide are required for the various embodiments described in this application. Instead, for some embodiments only some or a few of the features may be required in order to fulfil certain objects within the inventive concept. This table should not be construed as limiting; an embodiment may include features not listed in this table. An embodiment may provide benefits not listed in this table.

| **Technical feature** | **Benefit** |
|---|---|
| Compact ball - the ball member having the shape of a truncated sphere with essentially flat upper and lower surfaces | The ball valve assembly will be lighter and cheaper. It allows placement of the bearings as close as possible to the forces exerted on the ball member by the flowing media. This results in small deformations (minimal bending of shafts and displacement of the ball member as the shaft has minimal length) that provide a good bearing function. Less risk of misalignment of bearings which result in good maneuverability. Small deformations of shafts and ball are also of great benefit for the sealing over the valve seat. The ball's essentially flat top and bottom surfaces allows the valve housing to be adjusted accordingly, making also the valve housing lighter and cheaper. |
| Ball member providing flow of temperature mediating medium around the inner wall 43 | In the ball member, the inlet and outlet channels for the temperature mediating media are located in the bottom and/or the top of the ball member and separated by a partition wall which secure a flow of temperature mediating media around the inner wall 43 in the hollow space 41. Efficient tempering of the walls enclosing the hollow space is provided, more even heating/cooling effect of the walls is obtained, mix of recently injected media with media that has already served its tempering purpose in the hollow space 41 is minimized or eliminated, improvements in heat/cooling economy is obtained. |
| One passage only for cooling / heating media. | Simplified construction of the ball member + benefits discussed above |
| Two valve seats | Two valve seats, one at each end, secure tight sealing and best performance independent of flow direction. |
| Massive valve stem | A massive valve stem has less diameter than a hollow shaft and allows the use of normal sized actuators. The assembly of the valve is facilitated and the valve is less expensive. |
| Stable bearing mounted inside the house | Use of a bearing pedestal which is a reliable machine component provides a stable and secure bearing function, providing the best maneuverability. |
| Attachment of the power transmitting shaft directly on the inner tube of the ball | The actuator rotary operating torque acts directly on the inner wall in the ball member. The attachment of the power transmitting shaft directly on the inner wall of the ball provides a stable power transfer that act on the ball member so close to the flowing medium as possible. It also allows for the placement of the bearings as close to the flowing media's forces on the ball member as possible. |
| Bearing of the ball member instead of the stem | The bearings are placed closer to the ball member compared to conventional bearing of the stem. The stem need not be fixed in the ball member, it can function more as a follower, which makes the stem and attachment of the ball simpler and cheaper. It also means that there is no need for a through-stem through the wall in the bottom of the valve. This eliminates the need an opening in the wall that leads to a rise in prices and the risk of leakage. |

## Claims

1. A ball valve assembly comprising
- a rotary ball member (4),
- a housing (20) defining an inner chamber (3) for receiving said ball member (4);
- an upper bearing pedestal (13A) for enabling rotational movement of the ball member;
- a valve stem (5) for rotating the ball member (4) around an axis of rotation (B),
-- a lower bearing pedestal (13B), opposite to the upper bearing pedestal (13A), for enabling rotational movement of the ball member (4); and
- a first (83) and second (93) valve seat positioned at diametrically opposite sides of the ball member (4),
wherein the ball member (4) is rotatably arranged relative the valve housing (20) about the axis of rotation (B) and is provided with a through hole (41) forming a passageway for fluids, the ball member (4) having an outer wall (42) facing the valve housing (20) and an inner wall (43) facing the through hole (41) arranged such that a hollow space (40) is formed between the walls (42, 43), the ball member (4) further comprising temperature controlling arrangement for injecting a temperature controlling medium into the hollow space (40) so that a temperature of the inner wall and/or outer wall can be controlled, and a first stub shaft (10) and a second stub shaft (11),
**characterized in th**at said first stub shaft (10) extends from the inner wall (43) along said axis of rotation (B), and said second stub shaft (11) extends from the inner wall (43) along said axis of rotation (B) on an opposite side of the through hole (41), and further **in that** said first (13A) and said second (13B) bearing pedestal are arranged to be connected to the first (10) and second (11) stub shafts respectively, said bearing pedestals (13A, 13B) being arranged to enable rotational movement of the ball member (4) around the axis of rotation (B).

2. A ball valve assembly according to claim 1, wherein the bearing pedestals (13A, 13B) are in the form of a central member (130') having at least one attachment portion (131, 132) fixed thereto arranged for mounting within said housing (20).

3. A ball valve assembly according to claim 2, wherein two attachment arms (131, 132) are fixed to the central member (130') arranged to provide an attachment surface (133), preferably positioned adjacent a center line (C) of said central member (13').

4. A ball valve assembly according to claim 2 or 3, wherein at least one attachment surface (133) is attached to at least one support surface (25) within the valve housing (20).

5. A ball valve assembly according to any of claims 1-4, wherein the inner wall (43) and outer wall (42) have a connection (71) to each other at least in the area of the first and/or the second stub shafts (10, 11), said connection (71) separating the hollow space (40) on both sides of the first stub shaft (10) and/or the second stub shaft (11).

6. A ball valve assembly according to claim 5, wherein the connection (71) is preferably an integral wall (71) connecting the inner wall (43) and outer wall (42).

7. A ball valve assembly according to claim 5 or 6, wherein said connection (71) extends essentially parallel to the through hole (41).

8. A ball valve assembly according to any of claims 1-7, wherein the hollow space (40) extends around a circumference of the first stub shaft (10) between the outer wall (42) and inner wall (43).

9. A ball valve assembly according to any of claim 1-8, wherein a portion of said first stub shaft (10) protrudes on the outside of the outer wall (42) and is designed for receiving a valve stem (5) for rotating the ball member (4) and rotatably connecting the ball member (4) to the valve housing (20), and a portion of the second stub shaft (11) protrudes on the outside of the outer wall (42) and is designed to rotatably connect the ball member (4) to the valve housing (20).

10. A ball valve assembly according to any of claims 1-9, wherein the first stub shaft (10) forms an upper trunnion (6) and the second stub shaft (11) forms a lower trunnion (7) with end surfaces positioned inside said housing (20).

11. A ball valve assembly according to any of claims 1-10, wherein the ball member has the shape of a truncated sphere, with essentially flat upper and lower surfaces (4A, 4B).

12. A ball valve assembly according to any of claims 1-11, wherein the ball member comprises cast material.

13. Method for controlling a temperature of a ball member (4) in a valve assembly (1) according to any of the previous claims, comprising the steps of:
- providing a ball valve assembly (1) as defined in any of claims 1-12, and
- injecting a temperature mediating medium having a predetermined temperature into the hollow space (40) of the ball member (4) so that the temperature mediating medium fills the hollow space (40) and mediates the temperature of the inner wall (43) and the outer wall (42).

## Patentansprüche

1. Kugelventilanordnung, umfassend
- ein Drehkugelelement (4),
- ein Gehäuse (20), das eine Innenkammer (3) definiert, um das Kugelelement (4) aufzunehmen;
- einen oberen Lagerbock (13A), um die Drehbewegung des Kugelelements zu ermöglichen;
- einen Ventilschaft (5), um das Kugelelement (4) um eine Drehachse (B) zu drehen,
- einen unteren Lagerbock (13B), der dem oberen Lagerbock (13A) gegenüberliegt, um die Drehbewegung des Kugelelements (4) zu ermöglichen; und
- einen ersten (83) und zweiten (93) Ventilsitz, die an diametral gegenüberliegenden Seiten des Kugelelements (4) platziert sind,
wobei das Kugelelement (4) relativ dem Ventilgehäuse (20) um die Drehachse (B) drehbar angeordnet ist und mit einem Durchgangsloch (41) versehen ist, das einen Durchgang für Flüssigkeiten bildet, wobei das Kugelelement (4) eine Außenwand (42), die zu dem Ventilgehäuse (20) weist, und eine Innenwand (43), die zu dem Durchgangsloch (41) weist, aufweist, die so angeordnet sind, dass ein Hohlraum (40) zwischen den Wänden (42, 43) gebildet wird, wobei das Kugelelement (4) ferner eine Temperatursteuerungsanordnung zum Einspritzen eines Temperatursteuermediums in den Hohlraum (40) umfasst, sodass eine Temperatur der Innenwand und/oder der Außenwand gesteuert werden kann, und ein erster Wellenstumpf (10) und ein zweiter Wellenstumpf (11), **dadurch gekennzeichnet, dass** sich der erste Wellenstumpf (10) von der Innenwand (43) entlang der Drehachse (B) erstreckt und sich der zweite Wellenstumpf (11) von der Innenwand (43) entlang der Drehachse (B) an einer entgegengesetzten Seite des Durchgangslochs (41) erstreckt und ferner dadurch, dass der erste (13A) und der zweite (13B) Lagerbock angeordnet sind, um mit dem ersten (10) bzw. zweiten (11) Wellenstumpf verbunden zu werden und die Lagerböcke (13A, 13B) angeordnet sind, die Drehbewegung des Kugelelements (4) um die Drehachse (B) zu ermöglichen.

2. Kugelventilanordnung nach Anspruch 1, wobei die Lagerböcke (13A, 13B) in Form eines zentralen Elements (130') angeordnet sind, das mindestens einen Befestigungsabschnitt (131, 132) aufweist, der daran befestigt ist und angeordnet ist, um das Gehäuse (20) zu montieren.

3. Kugelventilanordnung nach Anspruch 2, wobei zwei Befestigungsarme (131, 132) an dem zentralen Element (130') befestigt sind, das angeordnet ist, eine Befestigungsfläche (133) bereitzustellen, die vorzugsweise neben einer Mittellinie (C) des Mittelelements (13') positioniert ist.

4. Kugelventilanordnung nach Anspruch 2 oder 3, wobei mindestens eine Befestigungsfläche (133) an mindestens einer Trägerfläche (25) in dem Ventilgehäuse (20) befestigt ist.

5. Kugelventilanordnung nach einem der Ansprüche 1 bis 4, wobei die Innenwand (43) und Außenwand (42) mindestens in dem Bereich des ersten und/oder zweiten Wellenstumpfs (10, 11) eine Verbindung (71) miteinander aufweisen, wobei die Verbindung (71) den Hohlraum (40) auf beiden Seiten des ersten Wellenstumpfs (10) und/oder des zweiten Wellenstumpfs (11) trennt.

6. Kugelventilanordnung nach Anspruch 5, wobei die Verbindung (71) vorzugsweise eine integrale Wand (71) ist, die die Innenwand (43) und die Außenwand (42) verbindet.

7. Kugelventilanordnung nach Anspruch 5 oder 6, wobei sich die Verbindung (71) im Wesentlichen parallel zu dem Durchgangsloch (41) erstreckt.

8. Kugelventilanordnung nach einem der Ansprüche 1 bis 7, wobei sich der Hohlraum (40) um einen Umfang des ersten Wellenstumpfs (10) zwischen der Außenwand (42) und der Innenwand (43) erstreckt.

9. Kugelventilanordnung nach einem der Ansprüche 1 bis 8, wobei ein Abschnitt des ersten Wellenstumpfs (10) auf der Außenseite der Außenwand (42) vorspringt, und entworfen ist, um einen Ventilschaft (5) aufzunehmen, um das Kugelelement (4) zu drehen und das Kugelelement (4) drehbar mit dem Ventilgehäuse (20) zu verbinden, wobei ein Abschnitt des zweiten Wellenstumpfs (11) auf der Außenseite der Außenwand (42) vorspringt und entworfen ist, das Kugelelement (4) drehbar mit dem Ventilgehäuse (20) zu verbinden.

10. Kugelventilanordnung nach einem der Ansprüche 1 bis 9, wobei der erste Wellenstumpf (10) einen oberen Zapfen (6) bildet und der zweite Wellenstumpf (11) einen unteren Zapfen (7) bildet, wobei die Endflächen in dem Gehäuse (20) platziert sind.

11. Kugelventilanordnung nach einem der Ansprüche 1 bis 10, wobei das Kugelelement die Form einer abgeschnittenen Kugel mit im Wesentlichen flachen oberen und unteren Flächen (4A, 4B) aufweist.

12. Kugelventilanordnung nach einem der Ansprüche 1 bis 11, wobei das Kugelelement ein Gussmaterial umfasst.

13. Verfahren für die Steuerung einer Temperatur eines Kugelelements (4) in einer Ventilanordnung (1) nach einem der vorhergehenden Ansprüche, umfassend die Schritte:
- Bereitstellung einer Kugelventilanordnung (1) wie in einem der Ansprüche 1 bis 12 definiert, und
- Einspritzen eines temperaturvermittelnden Mediums, das eine vorgegebene Temperatur aufweist, in den Hohlraum (40) des Kugelelements (4), sodass das temperaturvermittelnde Medium den Hohlraum (40) füllt und die Temperatur der Innenwand (43) und der Außenwand (42) vermittelt.

## Revendications

1. Un ensemble formant vanne à tournant sphérique comprenant
- un organe (4) formant tournant sphérique rotatif,
- un boîtier (20) définissant une chambre intérieure (3) destinée à recevoir ledit organe (4) formant tournant sphérique ;
- un socle formant palier supérieur (13A) pour permettre un mouvement de rotation de l'organe formant tournant sphérique ;
- une tige de vanne (5) destinée à faire tourner l'organe (4) formant tournant sphérique autour d'un axe de rotation (B),
- un socle formant palier inférieur (13B), opposé au socle formant palier supérieur (13A), pour permettre un mouvement de rotation de l'organe (4) formant tournant sphérique ; et
- un premier (83) et deuxième (93) sièges de vanne positionnés sur des côtés diamétralement opposés de l'organe (4) formant tournant sphérique,
l'organe (4) formant tournant sphérique étant agencé de manière rotative par rapport au boîtier de vanne (20) autour de l'axe de rotation (B) et présentant un trou traversant (41) formant un passage pour des fluides, l'organe (4) formant tournant sphérique ayant une paroi extérieure (42) tournée vers le boîtier de vanne (20) et une paroi intérieure (43) tournée vers le trou traversant (41) agencée de telle sorte qu'un espace creux (40) soit formé entre les parois (42, 43), l'organe (4) formant tournant sphérique comprenant en outre un agencement de régulation de la température pour injecter un milieu de régulation de la température dans l'espace creux (40) de manière à ce que la température de la paroi intérieure et / ou de la paroi extérieure (11) puisse être contrôlée, et un premier arbre d'embout (10) et un deuxième arbre d'embout (11),
**caractérisé en ce que** ledit premier arbre d'embout (10) s'étend depuis la paroi intérieure (43) le long dudit axe de rotation (B) et ledit deuxième arbre d'embout (11) s'étend depuis la paroi intérieure (43) le long dudit axe de rotation (B) sur le côté opposé du trou traversant (41), et
**en ce que**, en outre, lesdits premier (13A) et deuxième (13B) socles formant palier sont agencés de façon à être reliés respectivement aux premier (10) et deuxième (11) arbres d'embout, lesdits socles formant palier (13A, 13B) étant agencés pour permettre un mouvement de rotation de l'organe (4) formant tournant sphérique autour de l'axe de rotation (B).

2. Un ensemble formant vanne à tournant sphérique selon la revendication 1, dans lequel les socles formant palier (13A, 13B) sont sous la forme d'un élément central (130') sur lequel est fixée au moins une partie de fixation (131, 132) agencée pour être montée à l'intérieur dudit boîtier (20).

3. Un ensemble formant vanne à tournant sphérique selon la revendication 2, dans lequel deux bras de fixation (131, 132) sont fixés à l'élément central (130') agencé pour fournir une surface de fixation (133), de préférence positionnée de façon adjacente à une ligne centrale (C) dudit élément central (13').

4. Un ensemble formant vanne à tournant sphérique selon la revendication 2 ou la revendication 3, dans lequel au moins une surface de fixation (133) est fixée à au moins une surface de support (25) à l'intérieur du boîtier de vanne (20).

5. Un ensemble formant vanne à tournant sphérique selon l'une quelconque des revendications 1 à 4, dans lequel la paroi intérieure (43) et la paroi extérieure (42) ont une connexion (71) l'une à l'autre au moins dans la zone du premier et / ou du deuxième arbres d'embout (10, 11), ladite connexion (71) séparant l'espace creux (40) sur deux côtés du premier arbre d'embout (10) et / ou du deuxième arbre d'embout (11).

6. Un ensemble formant vanne à tournant sphérique selon la revendication 5, dans lequel la connexion (71) est de préférence une paroi (71) massive reliant la paroi intérieure (43) et la paroi extérieure (42).

7. Un ensemble formant vanne à tournant sphérique selon la revendication 5 ou la revendication 6, dans lequel ladite connexion (71) s'étend essentiellement parallèlement au trou traversant (41).

8. Un ensemble formant vanne à tournant sphérique selon l'une quelconque des revendications 1 à 7, dans lequel l'espace creux (40) s'étend autour d'une circonférence du premier arbre d'embout (10) entre la paroi extérieure (42) et la paroi intérieure (43).

9. Un ensemble formant vanne à tournant sphérique selon l'une quelconque des revendications 1 à 8, dans lequel une partie dudit premier arbre d'embout (10) fait saillie à l'extérieur de la paroi extérieure (42) et est conçue pour recevoir une tige de vanne (5) pour tourner l'organe (4) formant tournant sphérique et pour relier de manière rotative l'organe (4) formant tournant sphérique au boîtier de vanne (20), et une partie du deuxième arbre d'embout (11) faisant saillie sur l'extérieur de la paroi extérieure (42) et étant conçue pour relier de manière rotative l'organe (4) formant tournant sphérique au boîtier de vanne (20).

10. Un ensemble formant vanne à tournant sphérique selon l'une quelconque des revendications 1 à 9, dans lequel le premier arbre d'embout (10) forme un tourillon supérieur (6) et le deuxième arbre d'embout (11) forme un tourillon inférieur (7) avec des surfaces d'extrémité placées à l'intérieur dudit boîtier (20).

11. Un ensemble formant vanne à tournant sphérique selon l'une quelconque des revendications 1 à 10, dans lequel l'organe (4) formant tournant sphérique a la forme d'une sphère tronquée, avec des surfaces supérieure et inférieure (4A, 4B) essentiellement plates.

12. Un ensemble formant vanne à tournant sphérique selon l'une quelconque des revendications 1 à 11, dans lequel l'organe formant tournant sphérique comprend un matériau coulé.

13. Procédé de commande de la température d'un organe (4) formant tournant sphérique dans un ensemble formant vanne (1) selon l'une quelconque des revendications précédentes, comprenant les étapes consistant à :
- fournir un ensemble (1) formant vanne à tournant sphérique tel que défini dans l'une quelconque des revendications 1 à 12, et
- injecter un milieu de régulation de la température ayant une température prédéterminée dans l'espace creux (40) de l'organe (4) formant tournant sphérique, de sorte que le milieu de régulation de température remplisse l'espace creux (40) et régule la température de la paroi intérieure (43) et de la paroi extérieure (42).
